# EUROPEAN PATENT SPECIFICATION

(11) **EP 1 274 316 B1**
(45) Date of publication and mention of the grant of the patent: **14.07.2004**
(21) Application number: 01923441.8
(22) Date of filing: 19.04.2001
(51) Int. Cl.: A23K 1/165, A23K 1/14, A23K 1/10, A23K 1/06

(54) **DEPHYTINIZATION OF PLANT BASED PRODUCTS IN MIXTURES WITH HIGH MOISTURE ANIMAL, PLANT OR MICROBIAL BY-PRODUCTS**
ENTPHYTINISIERUNG VON PRODUKTEN AUF PFLANZENBASIS IN MISCHUNGEN MIT NEBENPRODUKTEN TIERISCHEN, PFLANZLICHEN ODER MIKROBIELLEN URSPRUNGS
DEPHYTINISATION D'INGREDIENTS ALIMENTAIRES VEGETAUX DANS DES MELANGES HUMIDES AVEC DES PRODUITS DERIVES A HAUTE TENEUR EN EAU VENANT D'ANIMAUX, DE VEGETAUX OU DE MICROBES

(30) Priority: 19.04.2000 US 198320 P
(43) Date of publication of application: 15.01.2003
(73) Proprietor: University of Saskatchewan Technologies Inc., Saskatoon, Saskatchewan S7N 5C8 (CA)
(72) Inventor: MAENZ, David, D., Saskatoon, Saskatchewan S7N 1J8 (CA); CLASSEN, Henry, L., Saskatoon, Saskatchewan S7H 5G1 (CA); NEWKIRK, Rex, W., Saskatoon, Saskatchewan S7S 1E6 (CA)
(74) Representative: Berkenbrink, Kai-Oliver
(86) International application number: PCT/CA2001/000535
(87) International publication number: WO 2001/078521

(56) References cited:
- WO-A-00/10404
- WO-A-99/39589
- US-A- 5 891 708
- US-A- 5 904 942

## Description

The invention relates to the dephytinization of plant based products in mixtures with high moisture animal, plant or microbial by-products to produce a high quality dietary product for mono-gastric animals.

### BACKGROUND OF THE INVENTION

Phosphorous is a necessary nutrient for animals. The main food sources which are high in phosphorus compounds useable by mono-gastric animals are the protein food groups of meat, organ meats, and milk.

Phosphorous is present in the plant based feed products for mono-gastric animals, but the phosphorous content of these products is found mainly in the form of phytate. Phytate (myo-inositol hexakis phosphate) is the storage form of phosphorus in plant seeds. In the cells of the plant seed phytate is complexed with minerals such as magnesium (Mg), sodium (Na) and calcium (Ca) to form a complex known as phytin. Occasionally, phytic acid is also present. Phytate, phytic acid and phytin are all converted by the process of this invention. The term "phytate" will, in this disclosure and claims, be used to refer to all three, unless another meaning is stated.

Phytate from plant sources is poorly digested and absorbed, and thus is largely unavailable for use by the body of a mono-gastric animal. As a result, the phosphorus is excreted or enters the manure where it may become an environmental concern, as excess phosphorous in manure can wash off fields and pollute surface water by promoting overabundant plant and algae growth that disrupts ecosystems. An additional problem with phytate relates to the capacity of the molecule to bind minerals and proteins. This binding decreases minerals and protein digestibility and is the cause of the antinutritional effects attributed to plant phytate when consumed by mono-gastric animals.

It is known to add water to plant based products which form a slurry, and then to add phytase. Phytase is an enzyme which breaks down phytate and converts it into inorganic phosphorus salts useable by animals and inositol. Inositol is itself a nutrient. This process is extremely costly, as the slurry which remains after the breakdown of phytate must be dried before the product can be used as animal feed.

WO-A-99 39589 discloses a method and an apparatus for processing krill hydrolysates. US-A-5 891 708 discloses a nutrient composition resulting from maize steeping.

A method to mix phytase with animal feed, so that the phytase will break down phytate within an animal's stomach is also known. However, because of conditions within the stomach, this method is only partially effective and a substantial portion (generally 45%) of the phytate is not hydrolyzed even if excess phytase is used.

### SUMMARY OF THE INVENTION

The invention provides for the dephytinization of plant based products, which contain phytate, to produce a high-quality dietary product for mono-gastric animals.

According to the invention, such plant based products are mixed with high moisture nutrients containing by-products of animal, plant or microbal origin, and phytase. The mixture is allowed to react whereby it breaks down and converts phytate to inorganic phosphates and inositol. The final product, which has increased nutritional value, can thus be dried and/or fed to mono-gastric animals including fish, poultry, pigs, dogs and cats.

The invention further provides a process to mix dry plant based products with high moisture by-products to produce a moisture content that is near the requirement for the dephytinization of plant derived phytate. The high moisture, plant, animal or microbal by-products should have at least 60% moisture, preferably such by-products should have 60% to 80% moisture. It is possible to use products with higher moisture content, such as distillers thins having up to about 97% moisture. However, this is not preferred, as an undue amount of moisture is present in comparison to the nutrient value of the high moisture by-product, and this moisture must then be removed to prepare dry animal feed. The digestible protein and/or digestible energy content of the high moisture by-product is such that, on a dry matter basis, the combination of the dry plant based product and the high moisture by-product is enriched in digestible protein and/or energy when compared to the digestible protein and/or energy content of the dry plant based product alone.

The inventive process saves money in comparison with known processes of separate dephytinization of dry plant based products and drying of high moisture by-product streams. In combining the dry plant product with the high moisture by-product no additional water is needed to generate adequate moisture conditions for dephytinization of the dry plant based product. The energy costs required to drive off water in the high moisture by-product is now applied to the mixture of the dry plant based product and the high moisture by-product. The addition of the plant based product to the high moisture by-product can also increase the value of the high moisture by-products by extending their quantity. For example, fish by-products are in high demand, and the addition of plant based products to the fish by-products thereby producing a product with more dry weight, which still retains the nutrient advantage of the fish by-products.

According to the invention there is provided a process for the treatment of high moisture animal, plant or microbial by-products and dry plant based products by mixing them with a source of phytase under controlled conditions of temperature, pH, and time.

Prior to mixing, the moisture content of the plant based product and the high moisture by-product are determined, and a desired moisture level for the mixture is chosen. The desired moisture level will be in the range from 60% to 85% with a preferred range of 65% to 75%. Once the desired moisture level is chosen, a calculation is made as to how much of each of the plant based product and the high moisture by-product must be blended to reach this moisture level. If two or more dry plant based products and/or two or more high moisture by-products are used, then the calculation should take into account the moisture level of each. The calculation of moisture levels in a resulting mixture of various starting products of known moisture content is a standard calculation well known in the animal feed manufacture art. It is preferred to add the plant based products to the high-moisture by-products while agitating the mixture, the other forms of addition known to the art can be used. It is also preferred to agitate gently while the phytase is acting on the mixture. Generally a batch process is preferred but a continuous process is within the scope of the invention.

The temperature at which the process is carried out is from 20°C to 60°C, preferably 35°C to 55°C. The pH level ranges from 1.5 to 7.0, notably 2.0 to 6.5. A particularly preferred pH level is 3.5 to 5.5. The time varies with the concentration of the phytase, the temperature at which the process is carried out and the pH level. Generally, it is preferred to carry on the process until such time as all of the phytate in the mixutre has been converted to inorganic phosphates and inositol. Generally, this will take approximately 1 to 3 hours when the temperature of the mixture is in the optimal range of 35°C to 50°C. However, it is not necessary to carry on the process until all phytate has been converted as most of the phytate is converted during the first hour of this process. The process may be terminated after a desired amount of phytate has been converted into inorganic phosphates and inositol.

It is preferred after the phytate has been fully converted, to heat the feed above 65°C for a period of at least 2 minutes. This denatures the phytase enzyme so that it is not present in the animal feed when it is eventually fed to animals.

The invention provides a plant based product that is high in available protein and/or digestible energy, low in phytate, and has increased availability of phosphorus, trace minerals, amino acids, and inositol over the original plant based product. The invention further removes the anti-nutritional effect of phytate and makes the product suitable for feeding to a wide range of animals. Since the phosphorus is readily available, it can be measured and used to formulate diets that exactly reflect an animal's phosphorus requirement. This reduces the environmental impact of excess phosphorus in animal excreta.

The invention provides a method of using the high moisture content of by-products to provide the required moisture content in the combination of dry plant based products and high moisture by-products for effective dephytinization to occur. The energy required to dry the mixture will be comparable to the energy required to dry the high moisture by-product alone. The dephytinization is achieved without adding additional water to the combination of the dry plant based product and the high moisture by-product. This results in a substantial savings in drying costs when compared to the total costs of conventional known processes.

### BRIEF DESCRIPTION OF THE DRAWINGS

These and other features of the invention will become apparent from the following description in which reference is made to the appended drawings wherein:
**Figure 1** summarizes the time-dependent process of phytate hydrolysis in a mixture of fish hydrolysate, rapeseed meal fines and phytase.
**Figure 2** summarizes the time-dependent process of phytate hydrolysis in a mixture of distillers thins, rapeseed meal fines and phytase.

### DESCRIPTION OF THE PREFERRED EMBODIMENT

The invention relates to the dephytinization of plant based products, which contain phytate, to produce a high-quality dietary product for mono-gastric animals. According to the invention, the plant based products are mixed with high moisture, high protein by-products of animal, plant or microbal origin, and phytase to cause a reaction which breaks down and converts phytate to inorganic phosphate and inositol. Optionally a chelating agent, other enzymes or enzyme co-factors can be added. Water can be added if necessary to get the mixture to a desired consistency, and acid or base can be added when necessary to adjust the pH

The term "dry plant based product" refers to dietary ingredients obtained from plants containing protein and a portion of total phosphorus in the form of phytate. These include: 1) fat extracted meals as a result of processing soybean, canola (rapeseed), sunflower, cottonseed, peanut and other seeds; 2) whole seeds such as peas, beans, and cereal grains; 3) plant based by-products such as rice bran, wheat bran, corn gluten meal; and 4) all other plant based products used in diet formulation, with phytate phosphorus levels greater than 25% of the total phosphorus in the product.

Rapeseed meal fines can be readily produced from desolventized-toasted rapeseed meal by sieving the meal after desolventizing-toasting and prior to hammer-milling. In commercial processing, harvested rapeseed meal is cleaned, dried, preconditioned, crushed, conditioned and solvent extracted, in the known way. The oil in the rapeseed migrates into the solvent which is typically n-hexane. The liquid phase of the process essentially consists of n-hexane and rapeseed oil and is readily separated from the solid phase that consists of the remaining n-hexane insoluble material. The solid phase is desolventrized and toasted in the known way to create a protein-enriched meal that typically contains approximately 11% moisture. At this point the meal is hammer-milled to generate a product that is typically used as an animal feed ingredient. The meal consists of large lumps prior to the hammer-milling stage. Fines were produced from this material by sieving through a wire screen mesh. Larger particles are retained on the screen. The fines that pass through the screen contain a lower content of hulls and thus are enriched in protein relative to conventional rapeseed meal. Results from a typical analysis of rapeseed meal fines are 11 parts of moisture, 41.6 parts of protein, 2.4 parts of phytate plus 45.6 parts of non-protein, non-phytate dry matter.

The term "high moisture by-product" includes high moisture animal by-products, high moisture plant by-products, and high moisture microbial by-products as defined herein.

The term "high moisture animal by-product" refers to dietary ingredients from raw or ensiled animal products that contain a moisture content in excess of 50%. These include macerated portions or whole carcasses from animals such as fish, poultry, swine or cattle and by-products of the dairy industry such as whey.

Fish hydrolysate consists of partial digests of whole fish or seafood processing by-products. Typically, the whole fish or seafood by-product is maintained under high moisture conditions (generally 80% moisture) under controlled conditions of temperature and duration with or without use of supplemental proteolytic enzymes. The conditions for generation of commercial by-product vary with the processor. During this incubation phase protein in the by-productis partially hydrolysed either by enzymes that naturally exist in the by-product or by added proteolytic enzymes. After hydrolysis the by-product is acidified (typically the pH is maintained below 4) to prevent spoilage and partially dried to facilitate shipping.

The term "high moisture plant by-product" refers to dietary ingredients of plant based aqueous processing that contain a moisture content in excess of 50%. These include products derived from wet processing of plant material. Examples are corn gluten meal and corn gluten feed.

The term "high moisture microbial by-product" refers to dietary ingredients derived from microbial fermentation that contain a moisture content in excess of 50%. These include products from the brewing and distilling industries.

Distillers thins or thin stillage is a by-product of the industrial fermentation of carbohydrates. The circumstance for the production of distillers thins will vary considerably given the feedstock material used in the fermentation process. Typically a grain such as corn, wheat or barley is used as the feedstock for the fermentation process. This material is milled to a grain meal consistency and water is added to create a slurry. Enzymes are then used to hydrolyse the grain starch in the slurry to fermentable carbohydrates such as glucose in the known way and these carbohydrates are then fermented by yeast to generate ethanol and carbon dioxide. The carbon dioxide gas is released from the batch and ethanol is removed by distillation. The material remaining after removal of the ethanol is termed whole stillage and is composed of proteins minerals, non-fermentable carbohydrates, and lipids. Solids (distillers solids) are removed by sieving and this process leaves a liquid by-product stream termed distillers thins. Typically the protein content of distillers thins will vary between 15% to 50% of the total dry matter depending upon the feedstock grain used in the fermentation process.

The moisture content of dry plant based products generally ranges from 8% to 15%. Conversely high moisture animal, plant or microbial by-products are characterised as having a moisture content of at least 50%. In particular, the moisture content of the animal by-products will be high, with a normal range of 65% to 90% moisture.

The high moisture by-products of the invention typically have 40% to 90% protein on a dry weight basis. Their moisture contact is preferably 60% to 80%, although by-products having a higher moisture content, such as distillers thins with 97% moisture content, may be used. The very high moisture content by-products are not preferred, however, due to the lower density of nutrients that are added to the mixture of plant based products at the preferred moisture conditions for dephytinization to occur.

According to the invention, phytase may be supplied as a liquid or powder. There are several commercial suppliers of phytase such as BASF Corporation, Germany, which markets it under the trademark natuphos®, and Novo Nordisk, Denmark, which markets BioFeed Phytase, and Alltech Inc., U.S.A., which markets Alltech Allzyme Phytase, that are highly enriched in phytase. The activity of phytase is conventionally described in units of activity. One (1) unit of phytase activity (FTU) is defined as the amount of enzyme enriched product that liberates one (1) micromole of inorganic phosphate per minute from an excess concentration of sodium phytate in aqueous solution at 37°C and pH 5.5. According to the invention, phytase concentrations of 10 units to 100,000 units can be used per kilogram of dry plant based products in the mixture of dry plant based products and high moisture by-products. The preferred concentrations of phytase are from 100 to 5000 units per kilogram of dry plant based products in the mixture.

In a particularly preferred form of the invention, a chelating agent may be added to the mixture. A chelator functions to bind minerals and shifting mineral equilibriums such that minerals are released from phytate-mineral complexes Decreasing mineral binding to phytate increases the susceptibility of the molecule to dephytinization by phytase.

A preferred chelating agent is citric acid because it is also a nutrient. The amount of citric acid added depends on the amount of phytate. Generally, amounts of 1% to 3% of citric acid by weight of the final product, are suitable. Other chelating agents can also be used in suitable amounts to chelate the inorganic material present in the phytate.

Another particularly preferred chelating agent is ethylenediaminetetra-acetic acid (EDTA). EDTA can be used in amounts of 1% to 3% by weight of the final product. Other enzymes or enzyme co-factors, as known in the art, may also be incorporated into the mixture.

The composition of the above noted products is mixed under controlled conditions of temperature, pH, and other environmental conditions for a suitable time period to optimise conversion of phytate to inorganic phosphorus and inositol.

The temperature at which the dephytinization is carried out can be from approximately 5°C to 65°C. Above 65°C, the phytase becomes denatured so the dephytinization cannot be carried out. Below 20°C, the speed of the dephytinization becomes sufficiently slow such that prolonged incubation times are necessary. Bacterial contamination during such prolonged incubation periods can become a concern. It is therefore preferred to carry out the dephytinization within the temperature range of 20°C to 60°C; preferably 40°C to 55°C.

The control of pH during dephytinization is important. pH can be controlled by the addition of small amounts of an acid (e.g. hydrochloric acid) or a base (e.g. sodium hydroxide) depending on whether the pH is to be lowered or raised. The preferred pH range is 4 to 5.5, although a pH of 1.5 to 7 can be used. Phytase tends to be most active at a pH of 5.0 or 2.5, because there are two different forms of phytase, which have peak activities at these levels. It is preferred to optimize to benefit from the activity level at a pH of 5.0. If the dephytinization is carried out at a very low pH, such as 2, it is then preferable to neutralize the animal feed before it is fed to animals. A pH in the range of 5 to 7 is quite acceptable as animal feed. In fact, canola fines have a natural pH of approximately 5.5.

In the especially preferred range with a moisture level of 65% to 75%, phytase concentrations in the preferred range of 500 to 1000 units, a temperature of 40°C to 55°C, and plant based products containing about 2% (e.g. rapeseed) of phytate, the dephytinization usually takes approximately 2 hours. If the dephytinization is carried out at room temperature, the time period is much longer, for example 8 to 10 hours. However, in some cases it may be preferred to take the risk of bacterial growth during this time period in order to save cost of applying heat to the mixture.

It is desired to terminate the dephytinization as soon as conveniently possible after the phytase has been fully converted to phosphates and inositol. The reason for this is that increased heating wastes energy and leads to unnecessary cost, as well as providing an environment in which bacteria can flourish. However, it is not necessary to terminate the heating exactly at the time when all of the phytate has been converted. Some additional heating can be tolerated. Often, it is preferred to continue heat for a short period such as 15 minutes to one half hour after it is expected that the dephytinization will have finished and all phytate has been converted, just to make sure that all conversion has in fact occurred.

The end point of the dephytinization occurs when no more phytate can be measured because all of the phytate has been converted by the phytase. However, it is not easy to measure the phytate content of a mixture of this sort. The preferable way of doing so is by high-pressure liquid chromotography, but this requires time consurning sample preparation and laboratory work. A cruder method is to measure the inorganic phosphate level, and to note when it stops increasing. This still requires laboratory work, although less sample preparation Practically, therefore it is preferred to carry out tests on a sample of the mixture, and determine when, at the phytase concentration and temperature used, the dephytinization stops. The process may then be carried out on larger amounts of the mixture, using the same concentration of phytase and the same temperature, for a period slightly longer then the period determined by testing the sample, to complete conversation of the phytate. Occasional testing can be done to ensure that all of the phytate is being converted, but it is not necessary to do detailed testing of each batch as the phytate content of feeds from similar sources tends to remain quite constant.

The final product according to the invention is useable as a dry feed. Generally, such product cannot have more than 15% moisture, so that it can be stored without bacterial action and so that it is moveable as a flowable solid without caking. Preferably, the final product should have about 10% to 12% moisture. This is accomplished by drying the product after the process of the invention has been carried out, or as a final step of the process.

The invention is described for the purpose of demonstration only with dry plant based products mixed with high moisture animal, plant or microbial by-products. It is recognized, however, that within the scope of the invention, the utility of the invention will include employing the illustrative method for all plant based products used in diet formulation that contain phytate.

Examples are provided herein which describe particular embodiments of the invention.

### Example 1 - Hydrolysis of phytate in a mixture of rapeseed meal fines (dry plant based product) and fish hydrolysate (high moisture animal by-product stream)

Desolventized-toasted rapeseed meal prior to hammer milling was obtained from a commercial supplier (CanAmera Foods, Nipawin, Saskatchewan). This material was sieved through a 60-60 mesh wire screen (0,01905 cm (0,0075 Inch)) wire diameter and 0,02337 cm (0,0092 Inch). opening size). Laboratory analysis of the rapeseed meal fines produced by the sieving are as follows: 11 parts of moisture, 41.6 parts of protein, 2.4 parts of phytate plus 45.6 parts of non-protein, non-phytate dry matter.

Fish hydrolysate was obtained from a commercial source (Ocean Biosource Specialty Marine Product, West Vancouver, British Columbia). This material was diluted with an equal volume of water to replace the water that was removed from the original hydrolysate during processing. Results from laboratory analysis of the diluted commercial fish hydrolysate are 80 parts of moisture, 16.8 parts of protein, 0.0 parts of phytate plus 3.2 parts of non-protein, non-phytate dry matter.

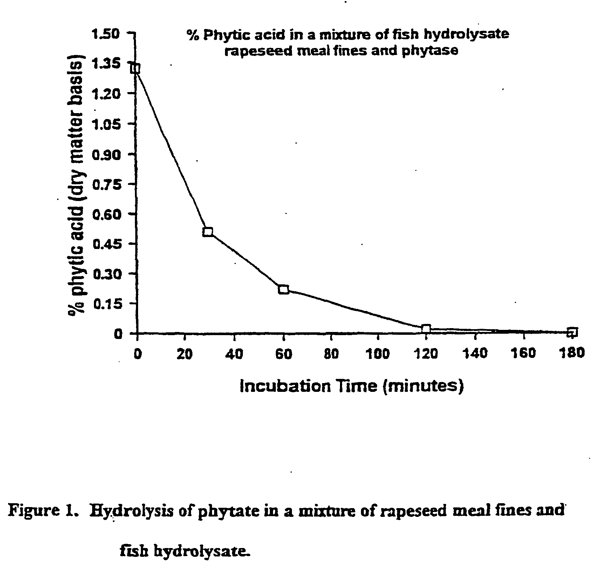

19.8g of rapeseed meal fines were combined with 116.2 g of fish hydrolysate. The resultant mixture contained 70 parts of water and 30 parts of total dry matter. 65% of the total dry matter in the mixture consisted of protein and 1.32% of the total dry matter in the mixture consisted of phytate. 22 units of phytase (natuphos®, a phytase obtained from BASF Corporation, Germany) was then added to the mixture. The mixture was then sealed in a plexiglass container and maintained at 50°C by incubation in a water bath and continuously mixed with a dough hook mixing system. The mixture was sampled at 30 minutes, 60 minutes, 120 minutes and 180 minutes from the time of addition of the phytase. The phytate content of the samples was determined following the method of Tangkongchitr et al. *Cereal Chem*. 58:226-228. The phytate content of the 30 minutes sample was 0.51% of total dry matter in the mixture. The phytate content of the 60 minute sample was 0.22% of the total dry matter in the mixture. The phytate content of the 120 minute sample was 0.02% of the total dry matter content in the mixture. The phytate content of the 180 minute sample was 0.00% of the total dry matter content of the mixture. Figure 1 summarizes the time-dependent process of phytate hydrolyisis in the mixture.

### Example 2 - Hydrolysis of phytate in a mixture of rapeseed meal fines (dry plant based product) and distillers thins (high moisture microbial by-product stream)

Rapeseed meal fines were obtained as described in the previous example and distillers thins were obtained from a local fermentation facility (Poundmaker AgVentures, Lanigan Saskatchewn). Laboratory analysis of the distillers thins indicated that the material consisted of 96.3 parts of water, 0 parts of phytate, 2.6 parts of protein and 1.1 parts of non-protein non-phytate materials.

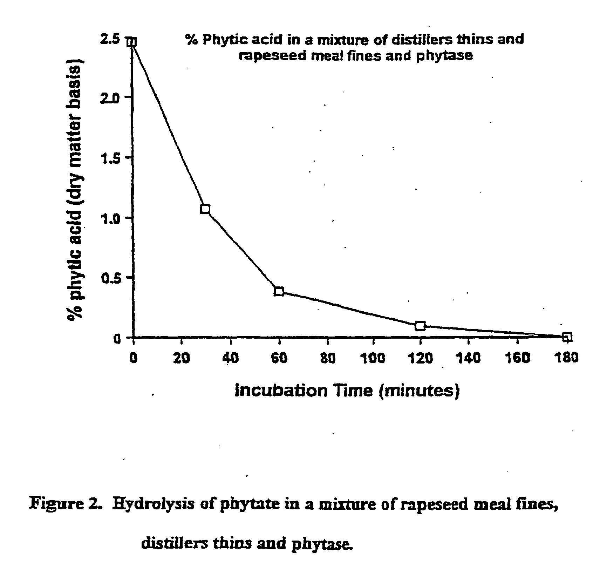

37.6 g of rapeseed meal fines were combined with 58.1 g of distillers thins. The resultant mixture contained 62.6 parts of water, and 37.4 parts of total dry matter. 48.2% of the total dry matter in the mixture consisted of protein and 2.5% of the total dry matter in the mixture consisted of phytate. 25 units of phytase (natuphos®, a phytase obtained from BASF Corporation, Germany) was then added to the mixture. The mixture was then sealed in a plexiglass container and maintained at 50°C by incubation in a water bath and continuously mixed with a dough hook mixing system. The was sampled at 30 minutes, 60 minutes, 120 minutes and 180 minutes from the time of addition of the phytase. The phytate content of the samples was determined following the method of Tangkongchitr et al. *Cereal Chem*. 58:226-228. The phytate content of the 30 minutes sample was 1.07% of total dry matter in the mixture. The phytate content of the 60 minute sample was 0.38% of the total dry matter in the mixture. The phytate content of the 120 minute sample was 0.10% of the total dry matter content in the mixture. The phytate content of the 180 minute sample was 0.00% of the total dry matter content of the mixture. Figure 2 summarizes the time-dependent process of phytate hydrolyisis in the mixture.

## Claims

1. A process for the manufacture of a feed product which comprises the steps of:
a) providing a dry plant based material useable in an animal feed and having a portion of total phosphorus in the form of phytate;
b) providing a high moisture by-product selected from a group consisting of animal, plant and/or microbial by-products useable in animal feed;
c) mixing the dry plant base feed product and the high moisture by-product to get a mixture having a moisture content in the range from 60% to 85% by weight;
d) combining the said mixture with phytase, said phytase being present in an amount of 100 units to 10000 units per kilogram of dry plant material and,
e) maintaining the mixture at a temperature of 20 degrees C. to 60 degrees C., and at a pH of 1.5 to 7, for a period sufficient to hydrolyse at least 50% of the phytate present in such plant based feed product.

2. A process according to claim 1 further comprising the step of heating the said mixture to at least 65 degrees C. for a period of at least 10 minutes, after completion of the steps set out in claim 1.

3. A process according to either of claims 1 or 2 in which the mixture is dried after the completion of the steps set out in such claim to a moisture content not exceeding 15%.

4. A process according to any of claims 1, 2 or 3 further comprising the step of adding a chelating agent to the said mixture, prior to the step of maintaining the mixture for said period sufficient to hydrolyse phytate.

5. A process as claimed in any of claims 1-4, in which the dry plant material has a moisture content of less than 15% and comprises at least one material selected from the group of : 1) fat extracted meals as a result of processing soybean, canola (rapeseed), sunflower, cottonseed, peanut and other seeds; 2) whole seeds such as peas, beans, and cereal grains; 3) plant based by-products selected from rice bran, wheat bran, corn gluten meal.

6. A process as claimed in any of claims 1-5, in which the high moisture by-product is an animal by-product containing more than 50% moisture and selected from the group consisting of at least one product selected from raw and ensiled animal products.

7. A process as claimed in any of claims 1-5, in which the high moisture by-product is selected from the group consisting of macerated portions or whole carcasses of fish, poultry, swine or cattle, by-products of the dairy industry and whey.

8. A process as claimed in any of claims 1-5, in which the high moisture by-product is a dietary ingredient of plant based aqueous processing that contains a moisture content in excess of 50% and which is derived from wet processing of plant material

9. A process as claimed in claim 8, in which the high moisture by-product is selected from corn gluten meal and corn gluten feed.

10. A process as claimed in any of claims 1-5, in which the high moisture by-product is a high moisture microbial by-product which is a dietary ingredient derived from microbial fermentation and having a moisture content in excess of 50%.

## Patentansprüche

1. Verfahren für das Herstellen eines Futterprodukts, das folgende Schritte umfasst:
a) Bereitstellen eines trockenen Materials auf Pflanzenbasis, das in einem Futtermittel verwendbar ist und einen Teil des gesamten Phosphors in Form von Phytat aufweist;
b) Bereitstellen eines hochfeuchten Nebenprodukts ausgewählt aus einer Gruppe bestehend aus tierischen, pflanzlichen und/oder mikrobiellen, in Futtermitteln verwendbaren Nebenprodukten;
c) Mischen des trockenen Futterprodukts auf Pflanzenbasis und des hochfeuchten Nebenprodukts um eine Mischung mit einem Feuchtigkeitsgehalt im Bereich von 60 bis 85 Gew.-% zu erhalten;
d) Kombinieren der Mischung mit Phytase, wobei die Phytase in einer Menge von 100 Einheiten bis 10.000 Einheiten pro Kilogramm trockenes pflanzliches Material vorliegt, und
e) Halten der Mischung bei einer Temperatur von 20 °C bis 60 °C und einem pH-Wert von 1,5 bis 7 für eine Zeitspanne, die ausreicht, um mindestens 50% des in einem solchen Futterprodukt auf Pflanzenbasis vorliegenden Phytats zu hydrolysieren.

2. Verfahren nach Anspruch 1, umfassend des Weiteren den Schritt des Erhitzens der Mischung auf mindestens 65 °C für eine Zeitspanne von mindestens 10 Minuten, nach Fertigstellung der in Anspruch 1 aufgeführten Schritte.

3. Verfahren entweder dem einen oder dem anderen der Ansprüche 1 oder 2 entsprechend, bei dem die Mischung nach Fertigstellung der in einem solchen Anspruch aufgeführten Schritte auf einen Feuchtigkeitsgehalt von nicht mehr als 15 % getrocknet wird.

4. Verfahren nach einem der Ansprüche 1, 2 oder 3, umfassend des Weiteren den Schritt des Zusetzens eines Chelatbildners zu der Mischung vor dem Schritt des Haltens der Mischung für die Zeitspanne, die zum Hydrolysieren von Phytat, ausreicht.

5. Verfahren nach einem der Ansprüche 1 - 4, bei dem das trockene Pflanzenmaterial einen Feuchtigkeitsgehalt von weniger als 15 % aufweist und mindestens ein Material umfasst ausgewählt aus der Gruppe von: 1) fettextrahierten Mehlen durch Verarbeiten von Sojabohnen, Rapssamen (Canola), Sonnenblumenkernen, Baumwollsamen, Erdnuss- und anderen Samenkernen; 2) ganzen Samenkernen wie Erbsen, Bohnen und Getreidekörner; 3) Nebenprodukten auf Pflanzenbasis, ausgewählt unter Reiskleie, Weizenkleie, Maisglutenmehl.

6. Verfahren nach einem der Ansprüche 1 - 5, bei dem das hochfeuchte Nebenprodukt ein tierisches Nebenprodukt ist, das mehr als 50 % Feuchtigkeit enthält und aus der Gruppe ausgewählt wird bestehend aus mindestens einem unter tierischen Rohprodukten und einsilierten tierischen Produkten ausgewählten Produkt.

7. Verfahren nach einem der Ansprüche 1 - 5, bei dem das hochfeuchte Nebenprodukt aus der Gruppe ausgewählt wird bestehend aus mazerierten Teilen oder ganzen Kadavern von Fischen, 'Geflügel, Schweinen oder Vieh, Nebenprodukten der Molkereiindustrie und Molke.

8. Verfahren nach einem der Ansprüche 1 - 5, bei dem ein hochfeuchtes Nebenprodukt ein Nahrungsbestandteil aus wässrigem Verarbeitungsprodukt auf Pflanzenbasis ist, das einen Feuchtigkeitsgehalt von über 50 % aufweist und aus dem Nassverarbeiten von pflanzlichem Material deriviert ist.

9. Verfahren nach Anspruch 8, bei dem das hochfeuchte Nebenprodukt aus Maisglutenmehl und Maisglutenfutter ausgewählt wird.

10. Verfahren nach einem der Ansprüche 1 - 5, bei dem das hochfeuchte Nebenprodukt ein hochfeuchtes mikrobielles Nebenprodukt ist, bei dem es sich um einen Nahrungsbestandteil handelt, der aus dem mikrobiellen Fermentieren deriviert ist und einen Feuchtigkeitsgehalt von mehr als 50 % aufweist.

## Revendications

1. Procédé de fabrication d'un produit d'alimentation comprenant les étapes consistant à :
a) proposer un matériau sèche à base de plantes pouvant être utilisé pour l'alimentation des animaux et ayant une partie du phosphore total sous la forme de phytate ;
b) proposer un sous-produit à haute teneur en humidité choisi parmi un groupe comprenant des sous-produits animaux, végétaux et/ou microbiens pouvant être utilisés pour l'alimentation des animaux ;
c) mélanger le produit d'alimentation sèche à base de plantes et le sous-produit à haute teneur en humidité en vue d'obtenir un mélange ayant une teneur en humidité comprise de 60 % á 85 % en poids ;
d) combiner ledit mélange avec la phytase, ladite phytase étant présente dans une quantité comprise de 100 unités á 10 000 unités par kilogramme de matériau sèche à base de plantes et,
e) maintenir le mélange à une température comprise de 20 degrés C. á 60 degrés C., et à un pH compris de 1,5 á 7, pendant une période suffisante pour hydrolyser au moins 50 % du phytate présent dans ce produit d'alimentation à base de plantes.

2. Procédé selon la revendication 1, comprenant également l'étape consistant à chauffer ledit mélange à au moins 65 degrés C. pendant une période d'au moins 10 minutes, une fois les étapes décrites dans la revendication 1 réalisées.

3. Procédé selon l'une quelconque des revendications 1 ou 2, dans lequel le mélange est séché une fois les étapes décrites dans cette revendication réalisées, jusqu'à obtenir une teneur en humidité ne dépassant pas 15 %.

4. Procédé selon l'une quelconque des revendications 1, 2 ou 3, comprenant également l'étape consistant à ajouter un chélateur au dit mélange, avant l'étape consistant à maintenir le mélange pendant une période suffisante pour hydrolyser le phytate.

5. Procédé selon l'une quelconque des revendications 1 à 4, dans lequel le matériau sèche à base de plantes présente une teneur en humidité inférieure à 15 % et comprend au moins un matériau choisi parmi le groupe comprenant : 1) les graisses d'extraction des farines en conséquence d'un traitement du soja, du canola (colza), du tournesol, de la graine de coton, de l'arachide et d'autres graines ; 2) les graines ordinaires telles que les pois, les haricots et les grains de céréale ;' 3) les sous-produits à base de plantes choisi parmi le son de riz, le son de blé et le fin gluten de maïs.

6. Procédé selon l'une quelconque des revendications 1 à 5, dans lequel le sous produit à haute teneur en humidité est un sous-produit animal comprenant plus de 50 % d'humidité et choisi parmi le groupe comprenant au moins un produit choisi parmi les produits.animaux bruts et ensilés.

7. Procédé selon l'une quelconque des revendications 1 à 5, dans lequel le sous-produit à haute teneur en humidité est choisi parmi le groupe comprenant des sous-produits de parties macérée de carcasses ou des carcasses entières de poissons, de volailles, de porc, de boeuf de l'industrie laitière et du lactosérum.

8. Procédé selon l'une quelconque des revendications 1 à 5, dans lequel le sous-produit à haute teneur en humidité est un ingrédient diététique résultant d'un traitement par voie aqueuse à base de plantes comprenant une teneur en humidité supérieure à 50 % et dérivé du traitement par voie humide d'un matériau à base de plantes.

9. Procédé selon la revendication 8, dans lequel le sous-produit à haute teneur en humidité est choisi parmi le groupe comprenant le fin gluten de maïs et le gros gluten de maïs.

10. Procédé selon l'une quelconque des revendications 1 à 5, dans lequel le sous-produit à haute teneur en humidité est un sous-produit microbien à haute teneur en humidité qui est un ingrédient diététique dérivé de la fermentation microbienne et ayant une teneur en humidité supérieure à 50 %.
